Europäisches Patentamt

European Patent Office

Office européen des brevets

(19)

(11) Publication number: **0 079 228**

**B1**

(12) **EUROPEAN PATENT SPECIFICATION**

(45) Date of publication of patent specification: **02.04.86**

(21) Application number: **82305934.0**

(22) Date of filing: **08.11.82**

(51) Int. Cl.⁴: **C 03 C 10/02,** C 03 C 4/14,
C 03 C 3/14, C 03 B 32/00,
H 01 M 2/16, H 01 B 1/08

(54) Ionic conductor materials.

(30) Priority: **10.11.81 GB 8133825**

(43) Date of publication of application:
**18.05.83 Bulletin 83/20**

(45) Publication of the grant of the patent:
**02.04.86 Bulletin 86/14**

(84) Designated Contracting States:
**DE FR GB IT NL SE**

(56) References cited:
**EP-A-0 019 037**
**US-A-3 829 331**
**US-A-4 164 610**

(73) Proprietor: **UNITED STATES BORAX &
CHEMICAL CORPORATION**
**3075 Wilshire Boulevard**
**Los Angeles, California 90010 (US)**

(72) Inventor: **Badzioch, Stan**
**40 Hillier Road**
**London, SW11 6AU (GB)**

(74) Representative: **Myerscough, Philip Boyd et al
J.A.Kemp & Co. 14, South Square Gray's Inn
London, WC1R 5EU (GB)**

**The file contains technical information
submitted after the application was filed and
not included in this specification**

Courier Press, Leamington Spa, England.

## Description

This invention relates to solid ionic conductor materials for metal ions, to their preparation and to their use.

Solid ionic conductor materials find particular use as solid electrolytes in high temperature, high energy density storage batteries. The anode reactant in such batteries usually is sodium or lithium, and electrolyte materials that are capable of conducting alkali metal cations and of withstanding the harsh environment within the batteries are of particular interest as solid electrolytes.

The conduction of lithium ions in various borate glasses has been extensively studied; see for example Irion et al, J. Solid State Chem., *31*. 285—294 (1980) where vitreous fast ionic conductors in the system $B_2O_3$-$Li_2O$-$LiCl$ are described, Smedley and Angell, Mat. Res. Bull., *15* (4), 421—425 (1980) where conductivity measurements in the $Li_2O$-$LiF$-$B_2O_3$ system are reported, U.S. Patent No. 4164610 where silica-free glasses within the $Li_2O$-$Al_2O_3$ and/or $F$-$B_2O_3$ system are described and U.S. Patent No. 4,184,015 which descirbes an amorphous cationic conductor of lithium comprising a composition corresponding to the general formula $(B_2O_3, xM.yN)$. $aLi_2O.bLi_zQ$, where M is selected from $Al_2O_3$, $V_2O_5$, $P_2O_5$, $As_2O_5$ and $As_2O_3$, N is selected from $SiO_2$ and $GeO_2$ and Q may be a halogen anion.

U.S. Patent No. 3,911,085 describes the preparation of cystalline lithium haloboracites of the formula $Li_4B_7O_{12}X$ where X is Cl, Br, I or a mixture thereof which are useful as solid electrolytes for galvanic cells. The preferred lithium haloboracites are those in which X is a mixture of Br and Cl where Br is 20 to 50 mole percent of X.

The conduction of sodium or potassium ions in borate glasses has also been studied.

Eichinger and Deublein, Mat. Res. Bull., *15*, 1263—1266 (1980) describe sodium phosphate-borate glasses which exhibit high ionic conductivities for sodium ions. After milling of these amorphous compounds, crystallisation occurred and densified samples showed higher conductivities than the glassy samples. The ionic conductivity of the polycrystalline compound $Na_8P_4B_2O_{17}$ at 300°C is between $10^{-1}$ and $10^{-2}$ohm$^{-1}$cm$^{-1}$ which compares favourably with β-alumina, the most often used of all cationic conductors. However, being crystalline, these compounds suffer from the usual disadvantages associated with pressing and sintering of bodies.

U.S. Patent No. 3,829,331 describes an amorphous glass system based on sodium borate which is said to demonstrate reasonably high sodium ion conductance. The system, which may contain halide additives to modify viscosity, expansion coefficient and the like, is said to have utility as a membrane separating anode and cathode in alkali metal-sulphur batteries. U.S. Patent No. 3,877,995 describes analogous amorphous glass systems based on potassium borate which are also said to have utility as a membrane material in alkali metal-sulphur batteries.

The present invention provides solid ionic conductor materials which are glass ceramics prepared by crystallisation from a glass derived from a composition comprising essentially at least one alkali or alkaline earth metal borate selected from sodium, calcium and magnesium borates and at least one source of halogen selected from metal chlorides, bromides and iodides.

The glass ceramic ionic conductor materials of the invention are particularly useful as solid electrolytes in high temperature, high energy density storage batteries, especially alkali metal-sulphur batteries. They also find application for example as ion-selective membranes, ion-specific sensors for on-line analysis and in other types of batteries including batteries capable of operating at room temperature.

The preparation of glass ceramics from glasses requires crystallisation of an amorphous glass and is achieved by subjecting the glass to a suitable heat-treatment procedure that results in controlled growth of crystal phases within the glass.

It was surprising to find that haloborate glasses can be easily converted in accordance with the invention into haloborate glass ceramics, because as a general rule the presence of boric oxide in glass compositions inhibits their controlled crystallisation.

Haloborate glasses can be converted into the glass ceramics of the invention by well established methods, such as those described by P. W. McMillan, "Glass Ceramics", Academic Press, London, 1964, pp 100 et. seq.

The conversion of haloborate glasses into the glass ceramics of the present invention results in a dramatic increase in low temperature ionic conductivity. For example, when the alkali or alkaline earth metal borate is a sodium borate, the ionic conductivities of the glass ceramics of the present invention at 200°C are typically about $2.5 \times 10^{-3}$ohm$^{-1}$cm$^{-1}$ which is about 10,000 times higher than for the borate alone. Conductivities of the haloborate glasses are essentially the same as those of the parent borates alone.

When the alkali or alkaline earth metal borate used is a sodium borate the preferred compound is borax ($Na_2B_4O_7$ or $Na_2O.2B_2O_3$).

Borax, when used, may be mixed with boric oxide to adjust the $Na_2O$:$B_2O_3$ ratio, but increasing the $B_2O_3$ content tends to have a deleterious effect on conductivity; so that even a light dilution of borax with $B_2O_3$, for example to give an $Na_2O$:$B_2O_3$ ratio of 1:2.25, can produce a very marked deterioration in conductivity. With a ratio of 1:3 no conductivity enhancement was observed. On the other hand, increasing the $Na_2O$ content has little effect on conductivity but tends to result in the formation of glass ceramics with physically inferior properties. The 1:2 ratio, namely that of borax itself, provides the best results in terms both of ease of preparation of the glass ceramics and ionic conductivity. The glass ceramics of the

2

invention may also contain optional additives to modify physical properties such as viscosity-temperature relationship, coefficient of thermal expansion, response of the glasses to heat treatment and the like.

The source of the halogen to be used is preferably a halide of a metal from Groups 2 to 8 of the Periodic Table of the Elements. Alternatively, especially when highly volatile halides are involved, a starting charge consisting of a mixture of less volatile reagents, chemically equivalent to the desired composition may be used.

More than one potentially mobile alkali metal cation, e.g. $Na^+$ and $K^+$, should not be used because of a tendency of mixtures of such cations to reduce conductivity.

Alkali metal halides alone have generally been found to have a solubility too low in molten alkali metal borates to provide sufficient halide in the glass ceramics of the invention for optimum ionic conductivity enhancements. Preferably therefore the source of halogen used in preparing the ionic conductor materials of the present invention is highly soluble and stable in molten alkali or alkaline earth metal borate. Excellent haloborate glasses form upon rapid cooling or quenching of such molten compositions.

As will be explained later, some control over the amount of halide should be excercised in order to optimise ionic conductivity.

Of the halides of the metals, the chlorides are preferred, for example $FeCl_2$, $CrCl_3$, $CoCl_2$, $MnCl_2$, $ZnCl_2$, $CaCl_2$, $MgCl_2$, $PbCl_2$ and $LaCl_3$. Other halides which may be used include such bromides as $CaBr_2$, $ZnBr_2$ and $PbBr_2$. Mixtures of metal halides can be used if desired. As mentioned in the foregoing, in the case where the metal halide would be expected to be excessively volatile to be incorporated into a molten borate system this problem may be overcome by using an initial charge consisting of a mixture of substantially non-volatile reagents chemically equivalent to the desired borate/metal halide composition. For example a composition equivalent to the borax-$AlCl_3$ system can be prepared from a mixture in appropriate quantities of borax, $B_2O_3$, NaCl and $Al_2O_3$.

The amount of halide incorporated into the glass ceramics of the present invention should be such as to provide the desired ionic conductivity. For example, in the case of sodium chloroborate systems, 4 to 10 weight percent chlorine may be used but the optimum chlorine content of the glass ceramic for maximum ionic conductivity is from 5 to 9 weight percent.

Similarly, there is an optimum bromine content between 10 and 20 weight percent for maximum ionic conductivity in bromide-containing systems; this higher range is in proportion to the increased atomic weight of bromine relative to chlorine.

The effect of chlorine content on conductivity is illustrated by the data in Table 1 below for the system borax-$FeCl_2$.

TABLE 1

| $FeCl_2$ (wt.%) | Metal (wt.%) | Chlorine (wt.%) | Observed conductivities (ohm$^{-1}$cm$^{-1}$) at °C | | |
|---|---|---|---|---|---|
| | | | 300 | 250 | 200 |
| 0 | — | — | $5.9 \times 10^{-6}$ | $1.3 \times 10^{-6}$ | $2.8 \times 10^{-7}$ |
| 5 | 2.2 | 2.8 | $3.3 \times 10^{-5}$ | $1.0 \times 10^{-5}$ | $2.2 \times 10^{-6}$ |
| 10 | 4.4 | 5.6 | $1.1 \times 10^{-2}$ | $6.7 \times 10^{-3}$ | $3.1 \times 10^{-3}$ |
| 12.5 | 5.5 | 7.0 | $6.7 \times 10^{-3}$ | $5.7 \times 10^{-3}$ | $4.2 \times 10^{-3}$ |
| 15 | 6.6 | 8.4 | $8.0 \times 10^{-3}$ | $5.3 \times 10^{-3}$ | $2.9 \times 10^{-3}$ |
| 20 | 8.8 | 11.2 | $2.5 \times 10^{-6}$ | $6.1 \times 10^{-7}$ | $1.2 \times 10^{-7}$ |
| 30 | 13.2 | 16.8 | $3.2 \times 10^{-6}$ | $9.1 \times 10^{-7}$ | $1.7 \times 10^{-7}$ |

The results of this and other studies utilizing different metal chlorides indicate that chlorine content, rather than metal chloride content, is the more important parameter for correlating data. The optimum amount of any particular halide to be used can fairly readily be determined experimentally by varying the halide content of a haloborate glass and determining the conductivity of the glass ceramic that is obtained by crystallisation of the haloborate glass.

Once the solid ionic conductor glass ceramics of the present invention have been formed they can withstand repeated high temperature treatments or cycling, provided that the temperatures encountered during such re-heating operations are not such that the crystalline nature of the glass ceramic is adversely affected. The ionic conductivities of the haloborate glass ceramics compare favourably with those of the

3

# 0 079 228

ionic conductors for lithium ions referred to above and are considerably higher than those of the conductors for sodium ions. The conductivity of β-alumina conductors, known ionic conductors for use in alkali metal-sulphur cells, are higher than those of the haloborate glass ceramics of the present invention, but β-alumina has the disadvantages of being brittle and of requiring a high sintering temperature (ca, 1850°C).

For the most part, it has been found that the concentration of halogen is more important than the source of that halogen. With the chloroborate system, the chloride of any Group 2—8 metal can serve as the source of the chloride ion. While the mechanism of ionic conductivity is not fully understood, the results suggest that the halide anions become incorporated into the structure of the glass ceramic forming a fixed lattice in which ionic motion is very facile. For some compositions the conductivities vary smoothly with change in temperature down to room temperature, whereas, with other compositions, the conductivities fall steeply at around 100°C, probably due to a phase transition in the conductivity-imparting compound or compounds. The phase transition may be prevented by increasing the amount of halide by using as the source of the halogen the same or different metal halide, or by altering the heat treatment procedure.

The optimum heat treatment conditions for a haloborate glass to obtain the maximum ionic conductivity vary to some extent with each glass composition. Although the metal added with the chloride plays little part, if any, in the ionic conductivity, it affects the physical properties such as the viscosity-temperature relationship which in turn affects the response to heat treatment.

With some compositions, however, it was observed that the conductivities were completely unaffected by the nature of the heat treatment. Examination of the differential thermal analysis (D.T.A.) curves showed that each of the compositions was characterised by the absence of crystallisation and crystal melting peaks, implying that the crystal growth proceeds very readily over a wide range of temperatures.

The systems which were found to be most responsive to heat treatment were those characterised by sharp exothermic crystallisation peaks on their D.T.A. curves. Thus, it is preferable before examining possible heat treatment procedures first to obtain an analysis by D.T.A.

The crystallisation temperature may be satisfactorily estimated from the position of the crystallisation exotherm on the D.T.A. curve. The choice of the crystallisation temperature, which usually lies within the range 550—650°C for chloroborates, is not critical. The crystallisation appears to proceed rapidly and may be completed in a period as short as 0.5 to 1 hour.

The optimum nucleation temperature, which is more relevant, is more difficult to determine and depends on the system investigated. This is because the optimum nucleation temperature is expected to lie within the range corresponding to viscosities of $10^{11}$ to $10^{12}$ poise ($10^{10}$ to $10^{11}$ Pa s). As different halides confer different viscosity-temperature relationships on the haloborate glasses, each system has to be judged on its own merits. Indications are that the optimum nucleation for most of the haloborate systems lie within the 475—500°C temperature range. The exact temperature may be reliably determined only by suitably designed systematic investigations for each particular system.

The invention is further illustrated by reference to the following examples.

Example 1

Measurements of electrical conductivities of haloborate compositions in accordance with the invention were made using an a.c. ammeter-voltmeter method by applying a low voltage of approximately 1V at 50Hz between the crucible and axial electrode described below. A graphite crucible of generally circular cross-section, outside diameter of 51 mm and inner diameter of 38 mm was used. The crucible was 51 mm deep and its walls and floor about 6.5 mm thick. The graphite crucible served as one of the electrodes during measurement of electrical conductivity, with an axial graphite rod 6.5 mm in diameter serving as the other electrode. An insulating boron nitride disc was placed at the bottom of the crucible to form a system with radial symmetry, all current flow being radial. The crucible was filled with mixed powdered charge, usually 70 grams, consisting of a borate with a desired halide, or an alternative charge chemically equivalent to the desired borate-halide system. The charge was melted at 900 to 1000°C for 2 hours in an inert atmosphere (nitrogen). With shorter melting times unsatisfactory products with lower conductivities were sometimes obtained.

The fused products were allowed to cool and converted into glass ceramics by adventitious crystallisation by cooling at about 5—6°C per minute within the range of 650—550°C where crystallisation usually occurs.

The results are summarised in Table 2. The halide contents stated in Table 2 are based on the compositions of the initial mixtures; the compositions are also expressed in terms of the contents of the metal and the halogen. The metal and halogen contents agree well with the results of chemical analyses, showing that there was in most cases a complete retention of both metal and halogen in the products, indicating complete dissolution of the halide in the borate after allowing for slight losses of some halides by sublimation during melting. This, however, does not apply to systems containing CuCl, CuCl$_2$ and NiCl$_2$, where precipitation of elemental metals occurs during melting, although reduction to metal with NiCl$_2$ is only relatively slight unlike the case with the copper chlorides. The liberation of metal during the glass-forming reaction complicates the preparation of the ionic conductors of the present invention by making necessary the introduction of an additional stage to separate precipitated metal from the glass phase. The use of halides giving rise to such problems is therefore preferably avoided.

4

TABLE 2
Summary of experiments on ionic conductivities of sodium haloborate compositions

| Test No. | Halide and its content (wt.%) | Metal (wt.%) | Halogen (wt.%) | Observed conductivities ($ohm^{-1}cm^{-1}$) at °C | | |
|---|---|---|---|---|---|---|
| | | | | 300 | 250 | 200 |
| $Na_2B_4O_7$ (control) | — | — | — | $5.9\times10^{-6}$ | $1.3\times10^{-6}$ | $2.8\times10^{-7}$ |
| | | Molten Solvent—borax ($Na_2B_4O_7$) | | | | |
| 1 | $10CoCl_2$ | 4.5 | 5.5 | $1.0\times10^{-2}$ | $6.7\times10^{-3}$ | $3.8\times10^{-3}$ |
| 2 | $10CrCl_3$ | 3.3 | 6.7 | $7.1\times10^{-3}$ | $5.0\times10^{-3}$ | $3.1\times10^{-3}$ |
| 3 | $20PbCl_2$ | 14.9 | 5.1 | $9.1\times10^{-3}$ | $6.0\times10^{-3}$ | $3.6\times10^{-3}$ |
| 4 | $12.5MnCl_2$ | 5.5 | 7.0 | $3.7\times10^{-3}$ | $2.5\times10^{-3}$ | $1.5\times10^{-3}$ |
| 5 | $10ZnCl_2$ | 4.8 | 5.2 | $1.5\times10^{-3}$ | $1.0\times10^{-3}$ | $5.9\times10^{-4}$ |
| 6 | $18LaCl_3$ | 10.2 | 7.8 | $1.7\times10^{-3}$ | $1.3\times10^{-3}$ | $9.2\times10^{-4}$ |
| 7 | $10CaCl_2$ | 3.6 | 6.4 | $2.4\times10^{-3}$ | $1.7\times10^{-3}$ | $1.2\times10^{-3}$ |
| 8 | $10SrCl_2$ | 5.5 | 4.5 | $5.0\times10^{-3}$ | $3.8\times10^{-3}$ | $2.4\times10^{-3}$ |
| 9 | $10MgCl_2$ | 2.6 | 7.4 | $2.8\times10^{-3}$ | $1.8\times10^{-3}$ | $1.1\times10^{-3}$ |

TABLE 2 (Cont.)
Summary of experiments on ionic conductivities of haloborate compositions

| Test | Halide and its content (wt.%) | Metal (wt.%) | Halogen (wt.%) | Observed conductivities ($ohm^{-1}cm^{-1}$) at °C | | |
|---|---|---|---|---|---|---|
| | | | | 300 | 250 | 200 |
| | | Mixtures of chlorides | | | | |
| 10 | $10FeCl_2$ $5CaCl_2$ | 4.4 1.8 | 5.6 3.2 } 8.8 | $1.4\times10^{-2}$ | $1.1\times10^{-2}$ | $7.7\times10^{-3}$ |
| 11 | $10FeCl_2$ $2CuCl$ | 4.4 1.3 | 5.6 0.7 } 6.3 | $1.2\times10^{-2}$ | $7.1\times10^{-3}$ | $4.3\times10^{-3}$ |
| | | Other halides | | | | |
| 12 | $34PbBr_2$ | 19.0 | 15.0 | $3.1\times10^{-3}$ | $1.9\times10^{-3}$ | $1.3\times10^{-3}$ |
| | | Molten solvent—($1.5 Na_2O.2B_2O_3$) | | | | |
| 13 | $10FeCl_2$ | 4.4 | 5.6 | $5.3\times10^{-3}$ | $3.3\times10^{-3}$ | $1.7\times10^{-3}$ |
| 14 | $12.5FeCl_2$ | 5.5 | 7.0 | $7.4\times10^{-3}$ | $5.4\times10^{-3}$ | $2.7\times10^{-3}$ |
| 15 | $15FeCl_2$ | 6.6 | 8.4 | $6.1\times10^{-3}$ | $4.2\times10^{-3}$ | $2.2\times10^{-3}$ |
| 16 | $12.5CoCl_2$ | 5.7 | 6.8 | $3.7\times10^{-3}$ | $2.4\times10^{-3}$ | $1.4\times10^{-3}$ |
| 17 | $12.5CrCl_2$ | 4.1 | 8.4 | $3.7\times10^{-3}$ | $2.5\times10^{-3}$ | $1.4\times10^{-3}$ |

TABLE 2 (Cont.)
Summary of experiments on ionic conductivities of haloborate compositions

| Test | Halide and its content (wt.%) | Metal (wt.%) | Halogen (wt.%) | Observed conductivities (ohm$^{-1}$cm$^{-1}$) at °C | | |
|---|---|---|---|---|---|---|
| | | | | 300 | 250 | 200 |
| 18 | 12.5MnCl$_2$ | 5.5 | 7.0 | $2.0\times10^{-3}$ | $1.5\times10^{-3}$ | $1.1\times10^{-3}$ |
| 19 | 12.5ZnCl$_2$ | 6.0 | 6.5 | $2.3\times10^{-3}$ | $1.6\times10^{-3}$ | $1.0\times10^{-3}$ |
| 20 | 12.5CaCl$_2$ | 4.5 | 8.0 | $9.5\times10^{-4}$ | $5.6\times10^{-4}$ | $2.9\times10^{-4}$ |
| Mixture of chlorides | | | | | | |
| 21 | 8.8FeCl$_2$ 4.4CaCl$_2$ | 3.9 1.6 | 4.9 2.8 } 7.7 | $4.5\times10^{-3}$ | $3.6\times10^{-3}$ | $2.4\times10^{-3}$ |
| Molten solvent—borax with added B$_2$O$_3$ | | | | | | |
| 22 | 90(Na$_2$O:2.25 B$_2$O$_3$)−10FeCl$_2$ | 4.4 | 5.6 | $5.3\times10^{-4}$ | $2.5\times10^{-4}$ | $1.3\times10^{-4}$ |
| Miscellaneous molten solvents | | | | | | |
| 23 | 90(AB*+0.25 NaF)−10FeCl$_2$ | 4.4 | 5.6 | $2.9\times10^{-2}$ | $2.1\times10^{-2}$ | $1.2\times10^{-2}$ |
| 24 | 87.5(AB+0.25 NaF)−12.5CrCl$_3$ | 4.1 | 8.4 | $4.2\times10^{-3}$ | $2.8\times10^{-3}$ | $1.4\times10^{-3}$ |
| | β-alumina electrolyte | — | — | $1.8\times10^{-1}$ | $1.4\times10^{-1}$ | $1.0\times10^{-1}$ |

*AB=Anhydrous Borax

In assessing the quality of an ionic conductor obtained upon crystallisation, a cell as described above, comprising graphite crucible as anode, axial graphite rod as cathode and glass ceramic as solid electrolyte and serving at the same time as the source of sodium ions was charged by passing direct current through it. An EMF of typically about 2V or above was observed after charging. This cell could be discharged through an external resistance load. With a good ionic conductor, having negligible electronic conductivity, only a slow decay of the voltage and current, due to polarisation, is observed during the discharge.

Example 2
In a series of comparative tests with haloborate compositions the following heat treatment procedures were investigated.

(i) Slow cooling of the melt at different rates;
(ii) Quenching the melt, reheating to an assumed nucleation temperature and holding for a desired period, and subsequently raising the temperature to crystallisation and holding for a desired period;
(iii) Quenching the melt and then reheating the glass directly to crystallisation temperature, and holding for a desired period, obviating the nucleating stage, or by cooling the melt directly to the crystallisation temperature.

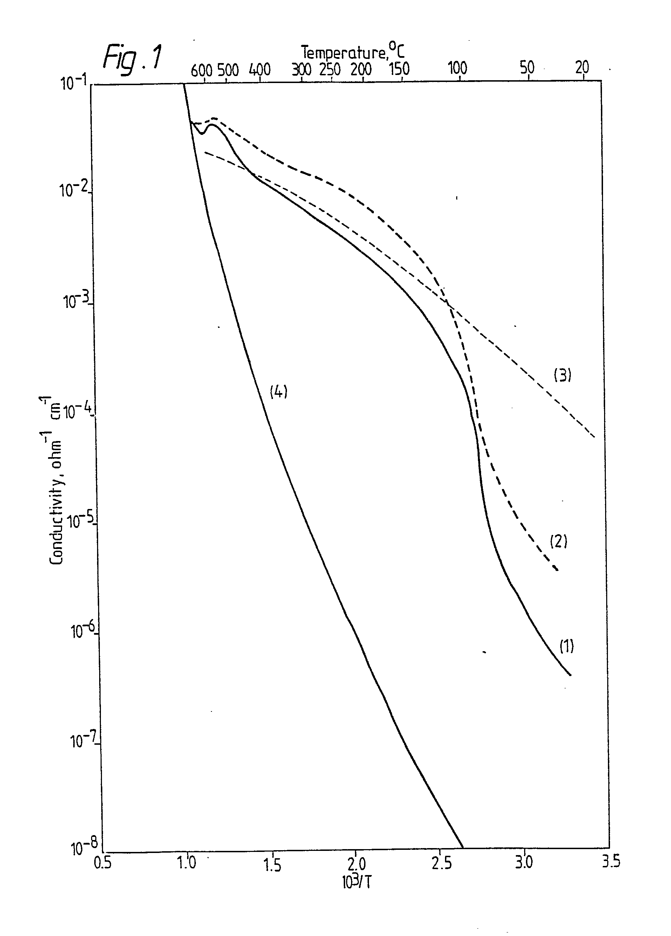

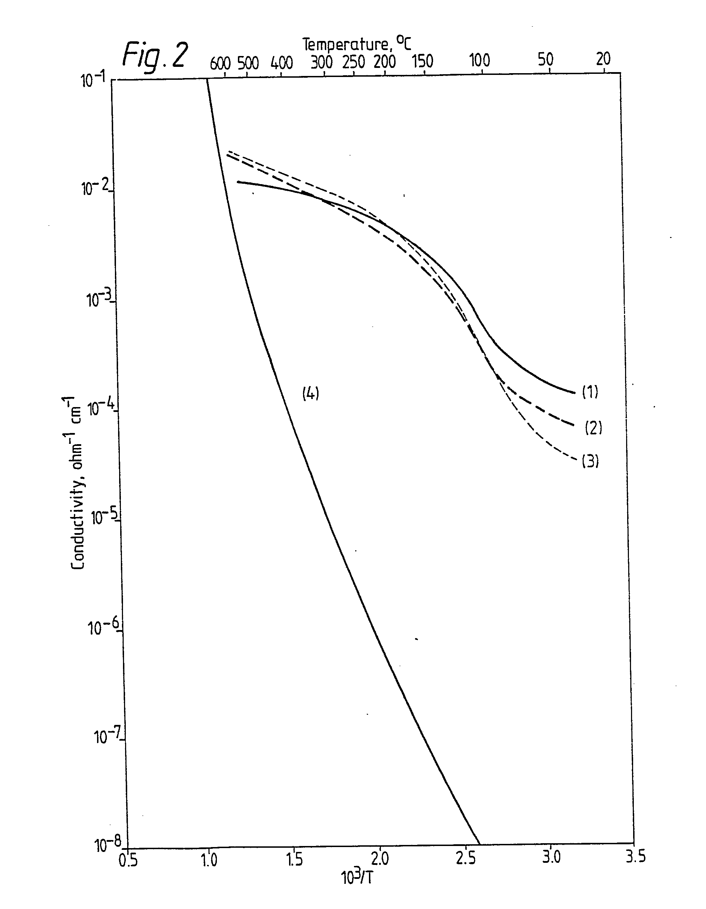

The results are illustrated by Figs. 1 and 2 of the accompanying drawings.
Fig. 1 shows the effect of heat treatment procedure on conductivity of a glass ceramic derived from a composition comprising 90 weight percent Na$_2$B$_4$O$_7$ and 10 weight percent FeCl$_2$ (curves (1) to (3)). For comparison the effect of temperature on conductivity for Na$_2$B$_4$O$_7$ alone is shown by curve (4). The heat treatments of curves (1) and (2) involved slow cooling at the rates of 5.3 and 2.3°C/min, respectively, while the heat treatment of curve (3) involved quenching, holding at 500°C for 1 hour and at 625°C for 1 hour.
Figure 1 shows that the phase transition observed at about 100°C during slow cooling (curves (1) and (2)) can be eliminated by using a heat treatment procedure (curve (3)) consisting of nucleation followed by

6

crystallisation. By elimination of the phase transition the usefulness of the haloborate glass ceramics may be extended down to room temperature.

Figure 1 also shows that by slowing down the rate of cooling there was over a two-fold increase in the conductivity. Other tests showed, however, that on cooling even more slowly no further conductivity enhancement was obtained.

Fig. 2 shows the effect of heat treatment procedure on conductivity of a glass ceramic derived from a composition comprising 90 weight percent $Na_2B_4O_7$ and 10 weight percent $CrCl_3$ (curves (1) to (3)). Curve (4) is as for Fig. 1. The heat treatment of curve (1) involved slow cooling at the rate of 2.3°C/min. The heat treatment of curve (2) involved quenching, reheating and holding at 600°C for 2 hours. The heat treatment of curve (3) involved cooling from the melt and holding at 550°C for 2.5 hours.

Figure 2 shows that using simplified heat treatment procedures, there is little effect on the conductivity of the glass ceramic. There is little difference when the conversion into a glass ceramic is effected by a crystallisation stage only at a selected temperature, without a prior nucleation stage, and also there is little difference whether the crystallisation temperature is reached by cooling the melt or by heating quenched glass from room temperature.

Example 3

A glass ceramic whose final composition was equivalent to 91 wt% borax and 9 wt% $VCl_5$ was prepared from:

|  | wt.% |
|---|---|
| $Na_2B_4O_7$ | 67.20 |
| $B_2O_3$ | 16.45 |
| NaCl | 11.54 |
| $NaVO_3$ | 4.81 |

The ionic conductivities measured at 300, 250 and 200°C were $1.7\times10^{-2}$, $1.2\times10^{-2}$ and $5.6\times10^{-3}$ohm$^{-1}$cm$^{-1}$, respectively.

Example 4

A glass ceramic whose final composition was equivalent to 91.2 wt.% borax and 8.8 wt.% $AlCl_3$ was prepared from:

|  | wt.% |
|---|---|
| $Na_2B_4O_7$ | 71.38 |
| $B_2O_3$ | 13.73 |
| NaCl | 11.54 |
| $Al_2O_3$ | 3.35 |

The ionic conductivities measured at 300, 250 and 200°C were $2.4\times10^{-3}$, $1.5\times10^{-3}$ and $6.7\times10^{-4}$ohm$^{-1}$cm$^{-1}$, respectively.

This composition failed to convert to a glass ceramic by slow cooling at 5°C/min., but formed a glass ceramic by crystallising at 650°C for 2 hours.

Example 5

A glass ceramic whose final composition was equivalent to 65.6 wt.% borax and 34.4 wt.% $PbBr_2$ was prepared from:

|  | wt.% |
|---|---|
| $Na_2B_4O_7$ | 46.77 |
| $B_2O_3$ | 13.04 |
| NaBr | 19.31 |
| PbO | 20.88 |

The ionic conductivities measured at 300, 250 and 200°C were $3.1 \times 10^{-3}$, $1.9 \times 10^{-3}$ and $1.3 \times 10^{-3} ohm^{-1}cm^{-1}$, respectively.

Example 6

A glass ceramic whose final composition was equivalent to 90 wt.% borax and 10 wt.% $CaCl_2$ was prepared from:

| | wt.% |
|---|---|
| $Na_2B_4O_7$ | 72.06 |
| $CaB_4O_7$ | 17.48 |
| NaCl | 10.46 |

The ionic conductivities measured at 300, 250 and 200°C were $5.2 \times 10^{-3}$, $3.6 \times 10^{-3}$ and $2.3 \times 10^{-3} ohm^{-1}cm^{-1}$, respectively.

Example 7

Glasses having the compositions shown below were prepared and subjected to various heat treatment procedures to prepare glass ceramics. Ionic conductivity measurements made at 300, 250 and 200°C are shown in the table below.

| Glass composition wt% | Additive wt% | Heat treatment | Observed conductivities (ohm$^{-1}$ cm$^{-1}$) at °C | | |
|---|---|---|---|---|---|
| | | | 300 | 250 | 200 |
| 90 $Na_2B_4O_7$ – 10 $FeCl_2$ | — | Cooling at 5°C per min | $1.1 \times 10^{-2}$ | $6.7 \times 10^{-3}$ | $3.1 \times 10^{-3}$ |
| " | 2.5 $CaBr_2$ | Cooling at 4.5°C per min. | $1.3 \times 10^{-2}$ | $9.8 \times 10^{-3}$ | $6.1 \times 10^{-3}$ |
| " | 2.5 $CaBr_2$ | 1 hr at 650°C | $1.3 \times 10^{-2}$ | $9.9 \times 10^{-3}$ | $5.6 \times 10^{-3}$ |
| " | 5 $CaBr_2$ | Cooling at 5.4°C per min. | $1.4 \times 10^{-2}$ | $9.3 \times 10^{-3}$ | $6.5 \times 10^{-3}$ |

The results obtained with compositions containing 10 wt.% $FeCl_2$ show that the $CaBr_2$ additive promotes rapid crystallisation over a wide range of temperatures so that the systems are essentially not affected by variations in the heat treatment procedures.

Effects similar to the above can also be obtained by adding NaF to haloborate compositions. Thus the material of composition 85.5 wt.% borax, 4.5 wt.% NaF, 10 wt.% $FeCl_2$ was also not affected by variations in heat treatment.

Example 8

A haloborate glass ceramic comprising 96 wt.% calcium borate ($CaB_4O_7$) and 4 wt% calcium chloride was prepared by heating to 1250°C to melt the ingredients and cooling to a temperature of 800°C. and holding for 2 hours to convert the calcium chloroborate glass into a glass ceramic.

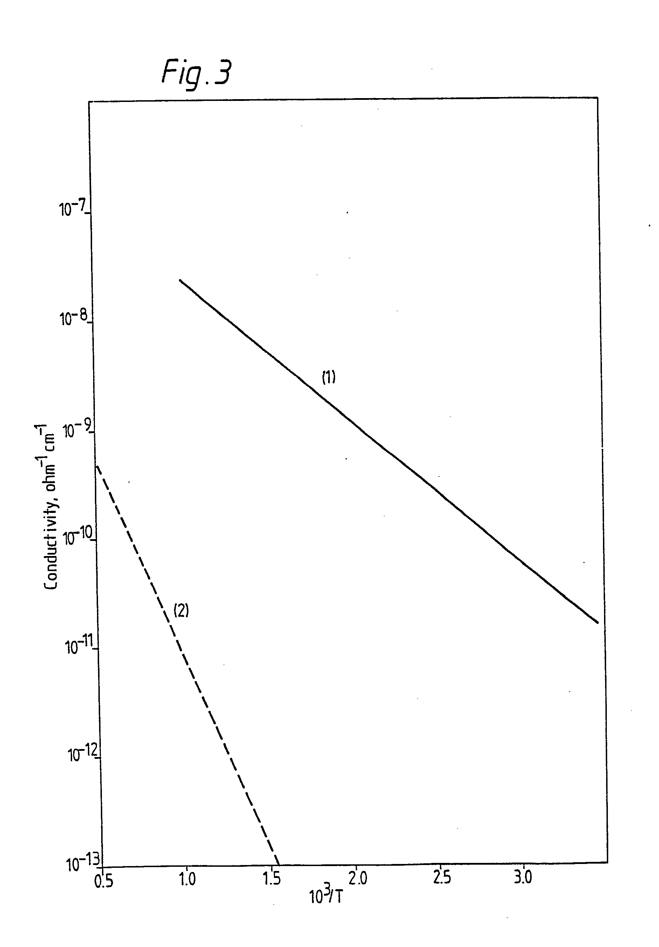

The results of ionic conductivity measurements are shown in Fig. 3 for the glass ceramic (curve (1)) and for the glass (curve (2)). In this system the conductivity is due to the mobility of the calcium ion.

Example 9

The glass ceramic compositions of the present invention are useful as solid electrolytes in, for example, alkali metal-sulphur batteries. To demonstrate the resistance to attack by liquid sodium, samples of typical compositions were contacted with liquid sodium at 300°C for periods up to 24 hours.

It was found that none of the samples was affected.

Similarly, when contacted with liquid sulphur at 300°C for periods up to 7 hours, none of the samples was affected.

### Claims

1. A borate-based solid ionic conductor material for metal ions, characterised in that the conductor material is a glass ceramic prepared by crystallisation from a glass derived from a composition comprising at least one alkali or alkaline earth metal borate selected from sodium, calcium and magnesium borates and at least one source of halogen selected from metal chlorides, bromides and iodides.

2. A conductor material according to claim 1 wherein the borate comprises borax.

3. A conductor material according to claim 1 or 2 wherein the source of halogen is a halide of a metal from Groups 2 to 8 of the Periodic Table.

4. A conductor material according to claim 3 wherein the halide is a chloride.

5. A conductor material according to any one of the preceding claims wherein the glass ceramic contains 4 to 10 weight percent chlorine.

6. A process for preparing a solid ionic conductor material as claimed in any one of the preceding claims, which process comprises heat treating an amorphous glass derived from the composition comprising the borate and the source of halogen to convert the glass into a glass ceramic.

7. A process according to claim 6 wherein the glass is heated at a crystallisation temperature of from 550 to 650°C until crystallisation is substantially complete.

8. A process according to claim 6 or 7 wherein the glass is first heated at a temperature of from 475 to 500°C.

9. A process according to claim 6, 7 or 8 wherein the composition comprises a mixture of metal halides to promote crystallisation.

10. Use of a solid ionic conductor material as claimed in any one of claims 1 to 5 as a solid electrolyte in an alkali metal-sulphur battery.

### Patentansprüche

1. Feste Ionenleiter für Metallionen auf der Basis eines Borats, dadurch gekennzeichnet, daß der Leiter eine Glaskeramik ist, hergestellt durch Kristallisation eines Glases, welches aus einer Masse enthaltend zumindest ein Alkali- oder Erdalkaliborat in Form von Natrium-, Calcium- oder Magnesiumboraten und zumindest eine Halogenquelle in Form der Chloride, Bromide und/oder Iodide von Metallen gebildet worden ist.

2. Ionenleiter nach Anspruch 1, worin das Borat Borax enthielt.

3. Ionenleiter nach einem der Ansprüche 1 oder 2, worin die Halogenquelle das Halogenid eines Metalls der II. bis VIII. Gruppe des Periodensystem war.

4. Ionenleiter nach Anspruch 3, worin das Halogenid ein Chlorid war.

5. Ionenleiter nach einem der vorhergehenden Ansprüche, worin die Glaskeramik 4 bis 10 Gew.-% Chlor enthält.

6. Verfahren zur Herstellung eines festen Ionenleiters nach einem der vorhergehenden Ansprüche, dadurch gekennzeichnet, daß man ein amorphes Glas aus dem Borat und der Halogenquelle zur Umwandlung in die Glaskeramik erhitzt.

7. Verfahren nach Anspruch 6, dadurch gekennzeichnet, daß man bis zur im wesentlichen Vollständigen Kristallisation auf eine Kristallisationstemperatur zwischen 550 und 650°C erhitzt.

8. Verfahren nach einem der Ansprüche 6 oder 7, dadurch gekennzeichnet, daß man das Glas zuerst auf eine Temperatur zwischen 475 und 500°C hält.

9. Verfahren nach einem der Ansprüche 6, 7 oder 8, dadurch gekennzeichnet, daß die Glasmasse ein Gemisch von Metallhalogeniden zur Begünstigung der Kristallisation enthält.

10. Anwendung des festen Ionenleiters der Ansprüche 1 bis 5 als festen Elektrolyt in einer Alkali/Schwefel-Batterie.

### Revendications

1. Matériau conducteur ionique solide à base de borate pour ions métalliques, caractérisé par le fait que le matériau conducteur est une céramique de verre préparée par cristallisation à partir d'un verre obtenu à partir d'une composition comprenant au moins un borate de métal alcalin ou alcalino-terreux choisi parmi les borates de sodium, de calcium et de magnésium et au moins une source d'halogène choisie parmi des chlorures, bromures et iodures métalliques.

2. Matériau conducteur selon la revendication 1, dans lequel le borate comprend du borax.

3. Matériau conducteur selon les revendications 1 ou 2, dans lequel la source d'halogène est un halogénure d'un métal des groupes 2 à 8 de la Classification périodique.

4. Matériau conducteur selon la revendication 3, dans lequel l'halogénure est un chlorure.

5. Matériau conducteur selon l'une quelconque des revendications précédentes, dans lequel la céramique de verre contient 4 à 10% en poids de chlore.

6. Procédé pour préparer un matériau conducteur ionique solide selon l'une quelconque des revendications précédentes, lequel procédé comprend un traitement thermique d'un verre amorphe obtenu à partir de la composition comprenant le borate et la source d'halogène pour transformer le verre en une céramique de verre.

7. Procédé selon la revendication 6, dans lequel le verre est chauffé à une température de cristallisation de 550 à 650°C jusqu'à ce que la cristallisation soit pratiquement complète.

8. Procédé selon les revendications 6 ou 7, dans lequel le verre est d'abord chauffé à une température de 475 à 500°C.

9. Procédé selon les revendications 6, 7 ou 8, dans lequel la composition comprend un mélange d'halogénures métalliques pour favoriser la cristallisation.

10. Utilisation d'un matériau conducteur ionique solide selon l'une quelconque des revendications 1 à 5, comme électrolyte solide dans un accumulateur métal alcalinsourfre.

0 079 228

Fig.1

Temperature, °C

Conductivity, ohm$^{-1}$ cm$^{-1}$

10$^3$/T

Fig. 2

# Fig.3

Conductivity, $ohm^{-1} cm^{-1}$

$10^{-7}$
$10^{-8}$
$10^{-9}$
$10^{-10}$
$10^{-11}$
$10^{-12}$
$10^{-13}$

(1)
(2)

0.5    1.0    1.5    2.0    2.5    3.0

$10^3/T$